# EUROPEAN PATENT SPECIFICATION

(11) **EP 2 057 838 B1**
(45) Date of publication and mention of the grant of the patent: **06.04.2016**
(21) Application number: 08704620.7
(22) Date of filing: 07.01.2008
(51) Int. Cl.: H04N 21/41, H04N 21/436, H04N 21/4363, H04N 5/44, H04N 5/445, H04N 5/775

(54) **METHOD FOR PROVIDING SERVICE INFORMATION AND APPARATUS THEREOF**
VERFAHREN ZUR ANBIETUNG VON INFORMATIONSDIENSTEN UND VORRICHTUNG DAZU
PROCÉDÉ PERMETTANT DE FOURNIR DES INFORMATIONS DE SERVICE ET APPAREIL CORRESPONDANT

(30) Priority: 24.04.2007 US 913615 P; 18.06.2007 KR 20070059611
(43) Date of publication of application: 13.05.2009
(73) Proprietor: Samsung Electronics Co., Ltd., Suwon-si, Gyeonggi-do, 443-742 (KR)
(72) Inventor: BAE, Dae-gyu, Suwon-si Gyeonggi-do 443-736 (KR); YOU, Ho-jeong, Suwon-si Gyeonggi-do 443-740 (KR)
(74) Representative: Appleyard Lees
(86) International application number: PCT/KR2008/000080
(87) International publication number: WO 2008/130094

(56) References cited:
- EP-A- 1 508 888
- WO-A-2007/043344
- JP-A- 2004 304 220
- KR-A- 20060 035 858
- US-A1- 2005 165 967
- US-A1- 2005 168 658
- US-A1- 2005 223 411
- US-A1- 2006 153 014
- US-A1- 2006 209 892
- "High-Definition Multimedia Interface Specification Version 1.3" INTERNET CITATION, [Online] XP002391813 Retrieved from the Internet: URL:http://www.hdmi.org/download/HDMI_Spec _1.3_GM1.pdf> [retrieved on 2006-07-24]

## Description

### Technical Field

Methods and apparatuses consistent with the present invention relate to providing service information, and more particularly, to a method for providing service information of an external apparatus connected to a video apparatus, and a video apparatus employing the same, and also to a method for providing service information of a video apparatus to an external apparatus connected to the video apparatus, and a video apparatus employing the same.

### Background Art

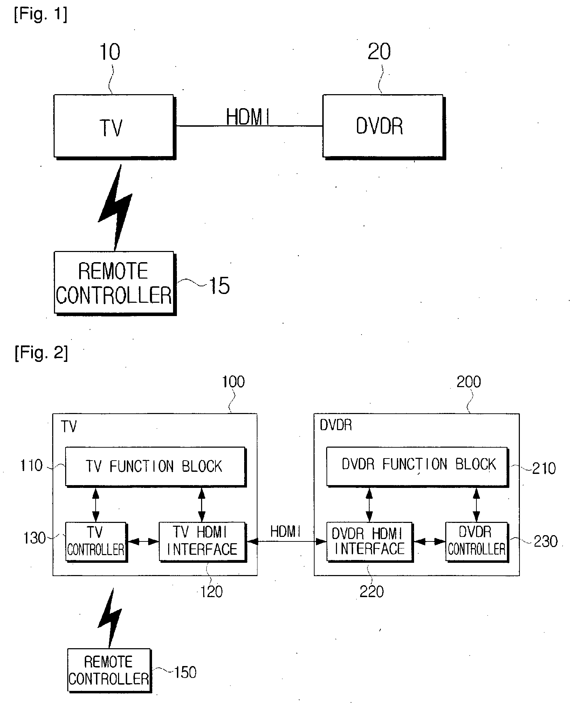

FIG. 1 is a diagram illustrating a video system which comprises apparatuses connected to each other according to the High Definition Multimedia Interface Consumer Electronics Control (HDMI CEC) standard. The video system shown in FIG. 1 is established by connecting a television (TV) 10 and a digital versatile disc recorder (DVDR) 20 according to the HDMI CEC standard. In addition to video signals, control signal are transceived between the TV 10 and the DVDR 20.

Accordingly, the TV 10 controls operation of the DVDR 20 according to a user's command transmitted through a remote controller 15, so that a user enjoys services such as music provided from the DVDR 20. However, a user is required to detect external apparatuses connected to the TV in order to enjoy a music service. The user selects one of the external apparatus connected to the TV that provides a music service, and selects a music service from various service functions of the selected external apparatus.

As described above, in order to receive a particular service, a user should be aware of what kind of apparatus can provide the particular service, which may cause an inconvenience to a user. Also, if a user is not aware of what apparatus provides a service the user wishes to receive, the user should ascertain respective functions of all external apparatuses connected to the TV 10 to find the apparatus providing the particular service, which may also cause an inconvenience to a user. The document entitled "High-Definition Multimedia Interface Specification Version 1.3" available from the following URL: http://www.hdmi.org/download/HDMI_Spec_1.3_GM1.pdf, discloses a specification for a HDMI for transmitting digital television audiovisual signals from DVD players and the like.

### Disclosure of Invention

### Technical Problem

Recently, there are many kinds of external apparatuses and these external apparatuses diversify their respective services, and users are interested in a particular service itself, rather than the external apparatus providing the particular service. In consideration of these recent situations, a video system does not satisfy users demands if it cannot directly provide service information to users.

### Technical Solution

The present invention provides a method for obtaining service information provided from a connected external apparatus, and a video apparatus employing the same.

Also, the present invention provides a method for generating service information provided by a video apparatus and providing the generated service information to an external apparatus connected to the video apparatus, and a video apparatus employing the same.

### Advantageous Effects

As described above, according to exemplary embodiments of the present invention, the video apparatus obtains service information provided by the external apparatus connected thereto, and provides a user with a list of services based on the obtained service information, thereby providing a convenience to a user in using the video apparatus.

Also, the video apparatus generates service information provided by the video apparatus and provides the generated service information to the external apparatus connected thereto, thereby providing a convenience to a user.

### Brief Description of the Drawings

The above and other aspects of the present invention will become apparent and more readily appreciated from the following description of exemplary embodiments, taken in conjunction with the accompany drawings of which:
FIG. 1 is a diagram illustrating a video system according to the HDMI CEC standard;
FIG. 2 is a block diagram illustrating a video system to which an exemplary embodiment of the present invention is applicable;
FIG. 3 is a view illustrating a method for providing service information according to an exemplary embodiment of the present invention;
FIGS. 4 to 8 are views illustrating a message structure in relation to service information according to an exemplary embodiment of the present invention;
FIGS. 9 to 11 are views illustrating a list of services according to an exemplary embodiment of the present invention; and
FIGS. 12 to 15 are views illustrating a method for providing service information and an apparatus employing the same according to other exemplary embodiments of the present invention.

### Best Mode for Carrying Out the Invention

Certain exemplary embodiments of the present invention will be described in greater detail with reference to the accompanying drawings.

FIG. 2 is a block diagram illustrating a video system to which an exemplary embodiment of the present invention is applicable. The video system shown in FIG. 2 is established by connecting a TV 100 and a DVDR 200 according to the HDMI CEC standard.

As shown in FIG. 2, the TV 100 comprises a TV function block 110, a TV HDMI interface 120, and a TV controller 130, and receives a command from a user through a remote controller 150.

The TV function block 110 performs its own proper functions. More specifically, the TV function block 110 processes broadcast signals received from a broadcasting station in a wire or wireless manner, for example, decodes and scales the signals, and then displays the signals on a display, thereby providing a broadcast to a user. Also, the TV function block 110 may display an image corresponding to video signals transmitted from the DVDR 200 through the TV HDMI interface 120, which will be described in detail below.

Also, the TV function block 110 displays a list of services on a display and thereby provides a user with a user interface (UI). The list of services displayed on the display by the TV function block 110 includes a list of services provided by the TV 100 and a list of services provided by external apparatuses connected to the TV 100.

The TV HDMI interface 120 is connected to the DVDR 200 according to the HDMI CEC standard to allow video signals and messages to be transceived between the TV and the DVDR 200.

The TV controller 130 controls operation of the TV function block 110 according to a user's command transmitted through the remote controller 150. Also, the TV controller 130 transmits a control command to the DVDR 200 through the TV HDMI interface 120 and thereby controls operation of the DVDR 200.

Upon receiving a command to display a list of services from a user, the TV controller 130 generates a request message for service information and transmits the generated request message to the external apparatuses connected to the TV 100. Upon receiving a reply message from the external apparatuses connected to the TV 100, the TV controller 130 generates a list of services based on the received reply message. The services provided by the external apparatuses may overlap. For example, an MP3 player and the DVDR 200 both provide 'music' service. As such, if there is a plurality of external apparatuses providing the same service, the TV controller 130 generates a list of services containing icons or names representing external apparatuses so that a user can distinguish services and select a service provided by any one of the plurality of external apparatuses.

Also, if a user's command to execute a particular service is received, the TV controller 130 generates a service execution request message to an external apparatus providing the particular service, and controls the TV HDMI interface 120 to transmit the generated service execution request message to the external apparatus providing the particular service therethrough.

As shown in FIG. 2, the DVDR 200 comprises a DVDR function block 210, a DVDR HDMI interface 220, and a DVDR controller 230.

The DVDR function block 210 records broadcast signals input from the TV 100 through the DVDR HDMI interface 220, which will be described in detail below, on a DVD mounted thereon, or reads video signals from the mounted DVD and provides the video signals to the TV 100 through the DVDR HDMI interface 220.

The DVDR HDMI interface 220 is connected with the TV 100 according to the HDMI CEC standard to allow video signals and messages to be transceived between the TV 100 and DVDR 200.

The DVDR controller 230 controls operation of the DVDR function block 210 according to a control command transmitted from the TV controller 130 through the DVDR HDMI interface 220.

Also, the DVDR controller 230 generates a message containing a service ID and a service name for service information provided by the DVDR 200 to transmit the service information to the TV 100, and transmits the generated message to the TV 100 through the DVDR HDMI interface 220.

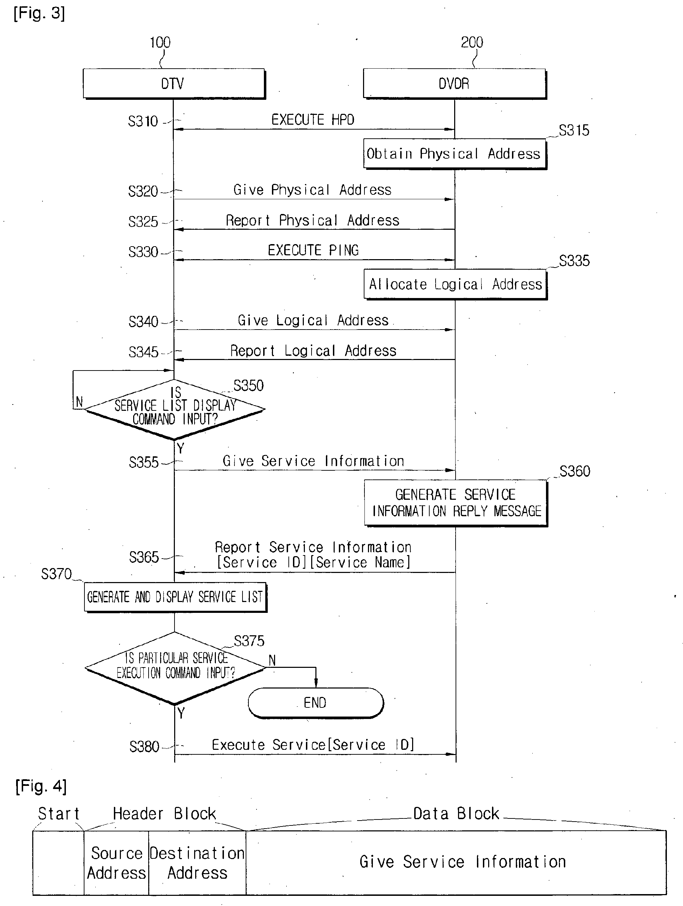

Hereinafter, a series of processes of the TV 100 obtaining service information from an external apparatus, and generating and displaying a list of services from the obtained service information will be described with reference to FIG. 3. FIG. 3 is a view illustrating a method for providing service information according to an exemplary embodiment of the present invention.

As shown in FIG. 3, if the TV 100 is connected to the DVDR 200 according to the HDMI CEC standard, an HDMI hot plug detection (HPD) is executed between the TV 100 and the DVDR 200 (operation S310).

Then, the DVDR 200 obtains a physical address (operation S315). The physical address has a close connection with an input port of a video apparatus connected to the DVDR 200. For example, the DVDR 200 obtains a physical address (1, 0, 0, 0) if it is connected to a first input port of the sink device, TV 100. The physical address changes if the DVDR 200 is disconnected from the TV 100 and is connected to another input port (e.g. a second input port of the TV 100 or input port of another video apparatus).

The TV controller 130 generates a physical address request message "Give Physical Address" to request a physical address and transmits it to the DVDR 200 (operation S320), and the DVDR controller 230 generates a physical address reply message "Report Physical Address" containing the obtained physical address and transmits it to the TV 100 (operation S325).

The DVDR 200, which is connected to the TV 100, performs a ping with another video apparatus connected to the TV 100 in order to be allocated a logical address of the DVDR 200 (operation S330).

Then, the DVDR 200 is allocated a logical address (operation S335). The logical address has been already defined in the CEC standard. The logical address changes every time that the ping is performed. However, if a particular external apparatus is allocated a particular logical address, other apparatuses cannot be allocated with the same logical address. Accordingly, the external apparatuses are allocated with their respective unique logical addresses. The external apparatus may have a plurality of logical addresses according to its functions. For example, the DVDR 200 is a video apparatus that has both a replay function and an audio function and thus has two logical addresses for the replay function and the audio function, respectively. Therefore, the DVDR 200 performs the replay function and the audio function simultaneously or individually.

The TV controller 130 generates a logical address request message "Give Logical Address" to request a logical address and transmits it to the DVDR 200 (operation S340), and the DVDR controller 230 generates a logical address reply message "Report Logical Address" containing the allocated logical address and transmits it to the TV 200 (operation S345). As such, data is communicable between the TV 100 and the DVDR 200.

The TV controller 130 determines whether a service list display command is received (operation S350). More specifically, if a user wishes to check services provided by the video system, the user can select a service list display menu from menus of the TV 100. Then, the TV 100 determines that the service list display command is received.

If the service list display command is received (operation S350-Y), the TV controller 130 generates a service information request message "Give Service Information" and transmits it to the external apparatuses connected to the TV 100 (operation S355). Accordingly, the DVDR controller 230 receives the service information request message through the DVDR HDMI interface 220.

The service information request message is to request information about the services provided by the video apparatuses.

The service information request message is transmitted to one of the external apparatuses connected to the TV 100 that has a destination address contained in the service information request message. In this exemplary embodiment, the destination address is the logical address of the DVDR 200. However, since the service information request message is not limited to the external apparatus having a particular address, the TV controller 130 transmits the generated service information request message to all of the external apparatuses connected to the TV 100.

The structure of the service information request message will be described in detail below. For the convenience of explanation, in this exemplary embodiment, the service information request message is transmitted to the DVDR 200 only. However, this should not be considered as limiting.

In response to the service information request message, the DVDR controller 230 generates a service information reply message "Report_Service_Information ([Service_ID], [Service_Name])", which contains service information provided by the DVDR 200, i.e., a service ID and a service name (operation S360), and the DVDR HDMI interface 220 transmits the generated service information reply message to the TV 100 (operation S365). In response to the service information request, the DVDR controller 230 transmits the service information reply message to the TV 100 through the DVDR HDMI interface 220. Accordingly, the TV controller 130 receives the service information reply message through the TV HDMI interface 120.

Through the service information reply message, the DVDR 200 which has received the service information request message provides information about services provided by itself to the TV 100 which transmitted the service information request message.

The TV 100 generates a list of services based on the service information reply message transmitted from the external apparatuses, and displays the generated list of services (operation S370). In generating a list of services, the TV controller 130 may use only service names from the service information reply message or in addition to the service names, use icons for the external apparatuses providing the service names.

The TV controller 130 determines whether a command to execute a service corresponding to a particular service item from the displayed list of services is input (operation S375). Herein, the service item means a service name or an icon for an external apparatus.

If the particular service item execution command is input (operation S375-Y), the TV controller 130 generates and transmits a service execution request message "Execute Service ([Service ID])" to the external apparatus providing the particular service (operation S380). In response to this, the external apparatus executes the particular service and provides it to the video apparatus, i.e., the TV 100.

FIGS. 4 to 8 are views illustrating a message structure in relation to service information according to an exemplary embodiment of the present invention.

FIG. 4 is a view illustrating a service information request message structure according to an exemplary embodiment of the present invention. As shown in FIG. 4, the service information request message comprises a start block representing a message start, a header block representing logical addresses of a source and of a destination, and a data block containing data for requesting service information. The data block may be divided into an opcode section and an operand section, and the data for requesting service information may be included in the opcode section.

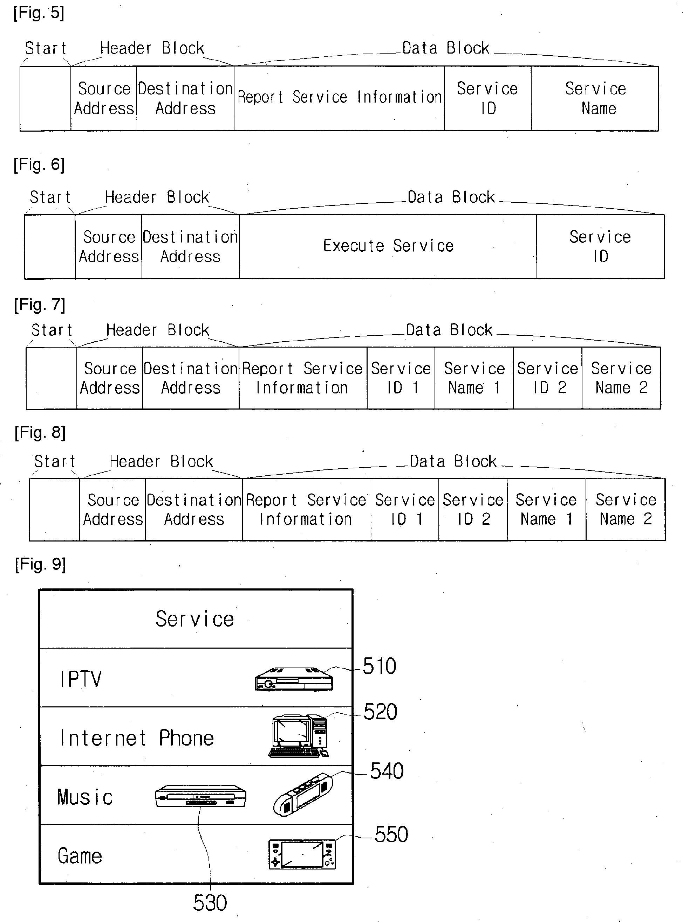

FIG. 5 is a view illustrating a service information reply message structure according to an exemplary embodiment of the present invention. Like the service information request message, the service information reply message comprises a start block, a header block, and a data block. However, the data block comprises a service ID of the service provided by the external apparatus and a service name of the service provided by the external apparatus, in addition to data for replying to the request message.

FIG. 6 illustrates a service execution request message structure according to an exemplary embodiment of the present invention. Like the service information reply message, the service execution request message comprises a start block, a header block, and a data block. However, the service execution request message comprises in the data block data for requesting service execution and a service ID. A service name may or may not be contained in the service execution request message. This is because the external apparatus can sufficiently perceive the message to execute a particular service with the service ID only.

If there is a plurality of services provided by an external apparatus, the external apparatus may generate and transmit a plurality of service information reply messages for its respective services. Also, as shown in FIGS. 7 and 8, if there is a plurality of services, one service information reply message may comprise in a data block a plurality of service IDs and a plurality of service names corresponding to the service IDs.

FIGS. 9 to 10 are views illustrating a list of services according to an exemplary embodiment of the present invention. As shown in FIG. 9, a list of services is displayed by service names. Also, for the user's convenience, the TV controller 130 controls such that the service names are displayed along with icons representing external apparatus providing the services. For example, the service 'IPTV' is displayed along with a set-top box icon 510 positioned on the right side since this service is provided by a set-top box. The service 'INTERNET PHONE' is displayed along with a computer icon 520 since this service is provided by a computer. The service 'MUSIC' is displayed along with icons 530 and 540 representing a DVDR and an MP3 player respectively, since this service is provided by both the DVDR and the MP3 player. Therefore, a user selects any one of the DVDR and the MP3 player icons to enjoy the service 'MUSIC'.

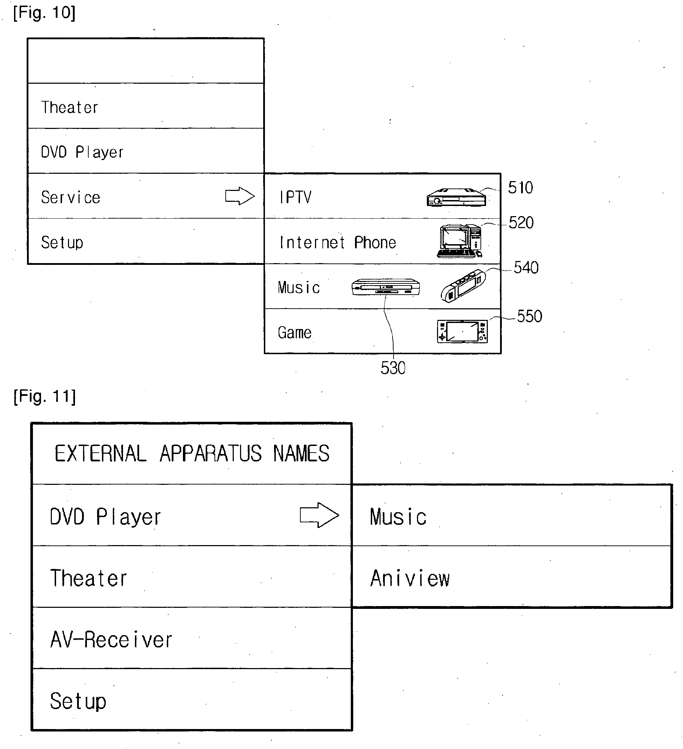

FIG. 10 is a view illustrating a list of services which is included in a list of external apparatuses as one item. If a user selects "service" from the list of external apparatuses, a list of services provided by the video system, that is, information about the services provided by the external apparatuses connected to the video apparatus is displayed. Also, as shown in FIG. 11, service information may be displayed for each external apparatus name in the list of external apparatuses.

Although the video system to which an exemplary embodiment of the present invention is applicable is established by connecting the TV 100 and the DVDR 200, the technical idea of the present invention can be applied to a video system established by other video apparatuses. The video apparatuses for the video system include a set-top box (STB), a DVD player (DVDP), a digital video recorder (DVR), a personal video recorder (PVR), a hard disk drive (HDD) player, a Blu-ray disk (BD) player, a BD recorder, a video cassette recorder (VCR), a home theater system, a personal multimedia player (PMP), a digital camera, and a digital camcorder.

Although in this exemplary embodiment the video apparatuses for the video system are defined as being connected to each other according to the HDMI CEC standard, this is merely an example for the convenience of explanation. Accordingly, the present invention can be applied to any scheme that enables video signals and messages to be transceived between the video apparatuses.

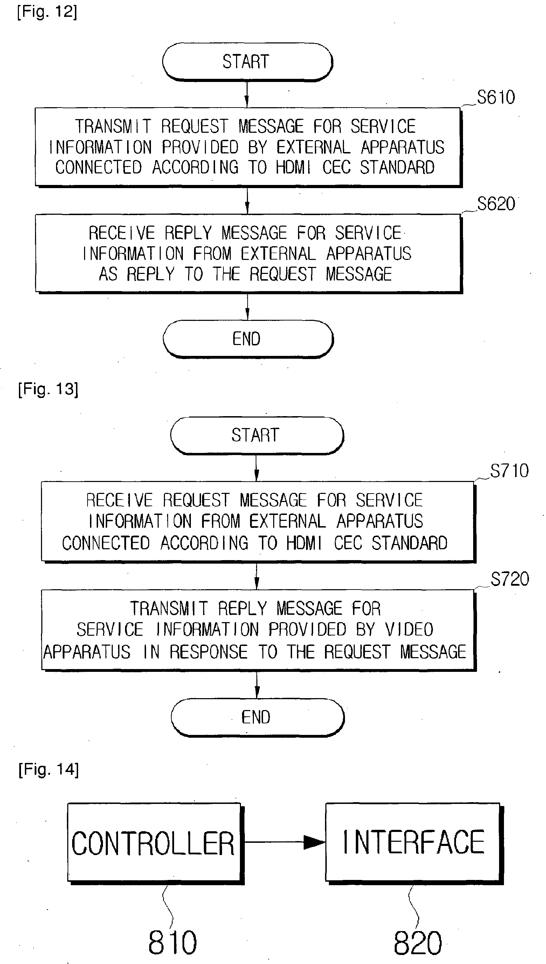

Hereinafter, another exemplary embodiment of the present invention will be described with reference to FIGS. 12 to 15. According to a method for providing service information according to another exemplary embodiment of the present invention, a video apparatus transmits a request message for service information provided by an external apparatus connected thereto according to the HDMI CEC standard (operation S610). The video apparatus receives a reply message for the service information from the external apparatus as a reply to the request message (operation S620).

According to a method for providing service information according to still another exemplary embodiment of the present invention, a video apparatus receives a request message for service information from an external apparatus connected thereto according to the HIDMI CEC standard (operation S710), and in response to the request message, transmits a reply message for the service information provided by the video apparatus to the external apparatus (operation S720).

As shown in FIG. 14, according to still another exemplary embodiment of the present invention, a video apparatus providing service information comprises a controller 810 which generates a request message for service information provided by an external apparatus connected thereto according to the HDMI CEC standard, and an interface 820 which transmits the request message.

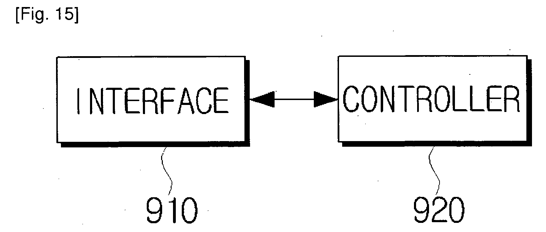

Also, as shown in FIG. 15, according to still another exemplary embodiment of the present invention, a video apparatus providing service information comprises an interface 910 which receives a request message for service information from an external apparatus connected thereto according to the HDMI CEC standard, and a controller 920 which generates a reply message for the service information provided by the video apparatus in response to the request message, and transmits the reply message to the external apparatus through the interface 910.

Accordingly, the video apparatus can obtain service information provided by the external video apparatus connected thereto.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A method for providing service information on a video apparatus, the method **characterised by** comprising:
transmitting from the video apparatus a request message (S610) to an external apparatus, which is connected according to the High Definition Multimedia Interface Consumer Electronics Control standard, the request message requesting service information provided by the external apparatus;
receiving at the video apparatus a reply message (S620) including the service information from the external apparatus as a response to the request message;
generating at the video apparatus a list of services based on the reply message;
displaying the list of services on the video apparatus; and,
transmitting a service execution request message from the video apparatus to the external apparatus to request an execution of a particular service contained in the reply message and selected from the displayed list of services.

2. The method as claimed in claim 1, wherein the request message comprises data for requesting the service information.

3. The method as claimed in claim 1 or claim 2, wherein the reply message comprises at least one of data for replying to the request message, a service identifier provided by the external apparatus, and a service name provided by the external apparatus.

4. The method as claimed in claim 1, wherein the service execution request message comprises at least one of data for requesting the service execution and a service identifier of the particular service.

5. The method as claimed in claim 1, wherein the list of services comprises at least one of a service name provided by the external apparatus and an icon of the external apparatus.

6. A video apparatus (100) **characterised by** comprising:
a controller (130) which generates a request message requesting service information provided by an external apparatus (200) connected to the video apparatus according to the High Definition Multimedia Interface Consumer Electronics Control standard; and
an interface (120) arranged to transmit the request message to the external apparatus and to receive a reply message from the external apparatus as a response to the request message;
wherein the controller is arranged to generate a list of services based on the reply message and to display the list of services on the video apparatus, and to generate a service execution request message to request an execution of a particular service contained in the reply message and selected from the displayed list of services; and,
the interface is arranged to transmit the service execution request message to the external apparatus.

7. The video apparatus as claimed in claim 6, wherein the request message comprises data for requesting the service information.

8. The video apparatus as claimed in claim 6, wherein the reply message comprises at least one of data for replying to the request message, a service identifier provided by the external apparatus, and a service name provided by the external apparatus.

9. The video apparatus as claimed in claim 6, wherein the service execution request message comprises at least one of data for requesting the service execution and a service identifier of the particular service.

## Patentansprüche

1. Verfahren zur Bereitstellung von Dienstinformationen auf einer Videovorrichtung, wobei das Verfahren **dadurch gekennzeichnet ist, dass** es Folgendes umfasst:
Senden einer Anforderungsnachricht (S610) von der Videovorrichtung an eine externe Vorrichtung, die gemäß dem "High Definition Multimedia Interface Consumer Electronics Control"-Standard angeschlossen ist, wobei die Anforderungsnachricht Dienstinformationen anfordert, die von der externen Vorrichtung bereitgestellt werden;
Empfangen einer Antwortnachricht (S620) an der Videovorrichtung, die die Dienstinformationen von der externen Vorrichtung als Antwort auf die Anforderungsnachricht enthält;
Erzeugen einer Liste von Diensten an der Videovorrichtung basierend auf der Antwortnachricht;
Anzeigen der Liste von Diensten auf der Videovorrichtung; und
Senden einer Dienstausführungsanforderungsnachricht von der Videovorrichtung an die externe Vorrichtung, um eine Ausführung eines bestimmten Dienstes anzufordern, der in der Antwortnachricht enthalten war und aus der angezeigten Liste von Diensten ausgewählt wurde.

2. Verfahren nach Anspruch 1, wobei die Anforderungsnachricht Daten zum Anfordern der Dienstinformationen umfasst.

3. Verfahren nach Anspruch 1 oder Anspruch 2, wobei die Antwortnachricht wenigstens eines von Daten zum Antworten auf die Anforderungsnachricht, einer von der externen Vorrichtung bereitgestellten Dienstkennung und einem von der externen Vorrichtung bereitgestellten Dienstnamen umfasst.

4. Verfahren nach Anspruch 1, wobei die Dienstausführungsanforderungsnachricht wenigstens eines von Daten zum Anfordern der Dienstausführung und einer Dienstkennung des betreffenden Dienstes umfasst.

5. Verfahren nach Anspruch 1, wobei die Liste von Diensten wenigstens eines von einem von der externen Vorrichtung bereitgestellten Dienstnamen und einem Symbol für die externe Vorrichtung umfasst.

6. Videovorrichtung (100), **dadurch gekennzeichnet, dass** sie Folgendes umfasst:
eine Steuerung (130), die eine Anforderungsnachricht erzeugt, um Dienstinformationen anzufordern, welche von einer externen Vorrichtung (200) bereitgestellt werden, die gemäß dem "High Definition Multimedia Interface Consumer Electronics Control"-Standard an die Videovorrichtung angeschlossen ist; und
eine Schnittstelle (120), die dafür ausgelegt ist, die Anforderungsnachricht an die externe Vorrichtung zu senden und eine Antwortnachricht von der externen Vorrichtung als Antwort auf die Anforderungsnachricht zu empfangen;
wobei die Steuerung dafür ausgelegt ist, basierend auf der Antwortnachricht eine Liste von Diensten zu erzeugen und die Liste von Diensten auf der Videovorrichtung anzuzeigen, sowie eine Dienstausführungsanforderungsnachricht zu erzeugen, um eine Ausführung eines bestimmten Dienstes anzufordern, der in der Antwortnachricht enthalten war und aus der angezeigten Liste von Diensten ausgewählt wurde; und
die Schnittstelle dafür ausgelegt ist, die Dienstausführungsanforderungsnachricht an die externe Vorrichtung zu senden.

7. Videovorrichtung nach Anspruch 6, wobei die Anforderungsnachricht Daten zum Anfordern der Dienstinformationen umfasst.

8. Videovorrichtung nach Anspruch 6, wobei die Antwortnachricht wenigstens eines von Daten zum Antworten auf die Anforderungsnachricht, einer von der externen Vorrichtung bereitgestellten Dienstkennung und einem von der externen Vorrichtung bereitgestellten Dienstnamen umfasst.

9. Videovorrichtung nach Anspruch 6, wobei die Dienstausführungsanforderungsnachricht wenigstens eines von Daten zum Anfordern der Dienstausführung und einer Dienstkennung des betreffenden Dienstes umfasst.

## Revendications

1. Procédé permettant de fournir des informations de service sur un appareil vidéo, le procédé étant **caractérisé en ce qu'**il comprend :
la transmission depuis l'appareil vidéo d'un message de requête (S610) à un appareil externe, qui est branché conformément à la norme de commande d'électronique grand public par interface multimédia haute définition, le message de requête demandant des informations de service fournies par l'appareil externe ;
la réception au niveau de l'appareil vidéo d'un message de réponse (S620) comportant les informations de service provenant de l'appareil externe en réponse au message de requête ;
la création au niveau de l'appareil vidéo d'une liste de services basée sur le message de réponse ;
l'affichage de la liste de services sur l'appareil vidéo ; et
la transmission d'un message de requête d'exécution de service de l'appareil vidéo à l'appareil externe pour demander une exécution d'un service particulier contenu dans le message de réponse et sélectionné dans la liste affichée de services.

2. Procédé selon la revendication 1, dans lequel le message de requête comprend des données pour demander les informations de service.

3. Procédé selon la revendication 1 ou la revendication 2, dans lequel le message de réponse comprend des données pour répondre au message de requête, et/ou un identifiant de service fourni par l'appareil externe, et/ou un nom de service fourni par l'appareil externe.

4. Procédé selon la revendication 1, dans lequel le message de requête d'exécution de service comprend des données pour demander l'exécution d'un service et/ou un identifiant de service du service particulier.

5. Procédé selon la revendication 1, dans lequel la liste de services comprend un nom de service fourni par l'appareil externe et/ou une icône de l'appareil externe.

6. Appareil vidéo (100) **caractérisé en ce qu'**il comprend :
un contrôleur (130) qui génère un message de requête demandant des informations de service fournies par un appareil externe (200) branché à l'appareil vidéo conformément à la norme de commande d'électronique grand public par interface multimédia haute définition ; et
une interface (120) configurée pour transmettre le message de requête à l'appareil externe et pour recevoir un message de réponse de l'appareil externe en réponse au message de requête ;
le contrôleur étant configuré pour générer une liste de services basée sur le message de réponse et pour afficher la liste de services sur l'appareil vidéo, et pour générer un message de requête d'exécution de service pour demander une exécution d'un service particulier contenu dans le message de réponse et sélectionné dans la liste affichée de services ; et
l'interface étant configurée pour transmettre le message de requête d'exécution de service à l'appareil externe.

7. Appareil vidéo selon la revendication 6, le message de requête comprenant des données pour demander les informations de service.

8. Appareil vidéo selon la revendication 6, le message de réponse comprenant des données pour répondre au message de requête, et/ou un identifiant de service fourni par l'appareil externe, et/ou un nom de service fourni par l'appareil externe.

9. Appareil vidéo selon la revendication 6, le message de requête d'exécution de service comprenant des données pour demander l'exécution d'un service et/ou un identifiant de service du service particulier.
